# EUROPEAN PATENT SPECIFICATION

(11) **EP 1 956 473 B1**
(45) Date of publication and mention of the grant of the patent: **15.04.2009**
(21) Application number: 07107295.3
(22) Date of filing: 01.05.2007
(51) Int. Cl.: G06F 3/048

(54) **System and method for accessing an icon of a handheld electronic device**
System und Verfahren zum Zugriff auf ein Symbol einer tragbaren elektronischen Vorrichtung
Système et procédé d'accès à une icône d'un dispositif électronique portable

(30) Priority: 08.02.2007 US 888885 P
(43) Date of publication of application: 13.08.2008
(73) Proprietor: Research In Motion Limited, Waterloo, Ontario N2L 3W8 (CA)
(72) Inventor: Lacey, Jon-David Kenneth, Richmond Hill Ontario L4S 1X4 (CA); Paas, Julian, Mississauga Ontario L5H 3L2 (CA); La, Giang Manh, Mississauga Ontario L5A 3A9 (CA); Steele, Joel, Richmond Hill Ontario L4S 2R1 (CA)
(74) Representative: Rickard, David John

(56) References cited:
- EP-A- 1 577 746
- WO-A-02/05079
- US-A- 5 949 408
- US-A1- 2001 015 721

## Description

The described embodiments relate generally to methods and systems for accessing an icon, such as a user profile application icon for example, of a handheld electronic device. Described embodiments also relate to a handheld electronic device employing such systems and methods.

Mobile devices are commonly carried for business and personal use in various different situations. In some situations, it may be socially desirable for the mobile device to be turned off. In other situations, the holder of the mobile device may wish to leave the mobile device on in order to enjoy certain functional aspects of the mobile device.

Commonly, when the mobile device is on, it is configured to notify the user of certain events, such as an incoming call, received email (or other) message or an alert, such as a reminder. It is also common for a user to change the user settings on the mobile device that specify whether and how the notifications are to be provided to the user. This change of user settings may need to be done quickly, in order to avoid potentially embarrassing social situations due to an obtrusive (i.e. noisy) notification from the mobile device.

Current mobile devices may allow access to user notification settings through a user profile application resident on the mobile device and selectable by selection of a user profile application icon in a scrollable list of application icons. Thus, in order to launch the user profile application icon, it is necessary for the user to scroll through the list of application icons, which may be lengthy, before being able to launch the user profile application and modify the event notification settings of the mobile device. The time taken to scroll to and launch the user profile application may be such that the user is embarrassed by an obtrusive notification from the mobile device before the user can appropriately change the notification settings.

Although the user profile application is generally not a frequently accessed application on a mobile device, when it is required to be accessed, it is often desirable to be able to access it quickly and easily, preferably with minimal input from the user. Also, applications other than the user profile application may need to be accessed quickly and easily without having to scroll through the main application icon list.

US 2001/0015721A discloses a method and apparatus for accessing a menu icon of a handheld communications terminal in which a menu screen is displayed in response to a key press, the menu screen including a horizontal first icon array (or list) of main menus and a window including a vertically disposed second list of sub-menu icons, the window containing the sub-menu icons being displayed using a soft key once one of the main menu icons is selected. The sub-menus of the second list include application icons such as "bell/vibration conversion," "bell/melody conversion" and "bell loudness." The main menus of the first list can be navigated using left and right shift keys and the sub-menu icons of the second list can be navigated using up and down shift keys whereby navigation of the display along a first (horizontal) navigation axis and a second (vertical) navigation axis is enabled. The selected icons of both the horizontal first list and the vertical second list can be emphasized.

### BRIEF DESCRIPTION OF THE DRAWINGS

For a better understanding of the described embodiments and to show more clearly how they may be carried into effect, reference will now be made, by way of example, to the accompanying drawings in which:

FIG. 1 is a block diagram of a mobile device in one example implementation;

FIG. 2 is a block diagram of a communication sub-system component of the mobile device of FIG. 1;

FIG. 3 is a block diagram of a node of a wireless network;

FIG. 4 is a block diagram showing a memory component of a mobile device in further detail;

FIG. 5 is a flowchart of a method of accessing a user profile application of the mobile device;

FIG. 6 is an example screenshot of a home screen of the mobile device;

FIG. 7 is an example screenshot of a user profile application window shown on a display of the mobile device; and

FIG. 8 is a flowchart of a method of shifting emphasis between icon groups.

### GENERAL

The invention relates generally to methods, systems and devices for accessing an icon on a display by shifting emphasis from one icon list to another icon list on the display. The icon may be a user profile application icon that can be used to access a user profile application.

In one aspect the present invention provides a method for accessing an icon of a handheld electronic device, comprising: providing on a home screen of a display of the handheld electronic device a main application icon list of main application icons oriented with respect to a first navigation axis and a subsidiary icon list comprising a plurality of icons and being spaced from the main application icon list; receiving first navigation input via a navigation component of the handheld electronic device, the navigation component enabling navigation in the display along the first navigation axis and along a second navigation axis; determining that the first navigation input comprises navigating along the second navigation axis; and **characterized in that** if a first main application icon in the main application icon list is emphasized prior to receiving the first navigation input, shifting emphasis to a default icon in the subsidiary icon list based on the determining, and storing a reference to the first main application icon to be used to return emphasis to the first main application icon when reverting to the main application icon list.

Preferably the second navigation axis is perpendicular to the first navigation axis.

In another aspect the invention provides a handheld electronic device, comprising: a processor; a display responsive to the processor; a navigation component having a first navigation axis and a second navigation axis, the navigation component being coupled to the processor for providing navigation input to the processor; a memory accessible to the processor and storing program code executable by the processor for executing a user interface application, wherein the user interface application is configured to cause the handheld electronic device to perform the steps of the above method.

In yet a further aspect the invention provides a computer readable medium storing computer readable instructions executable by a processor of a computing device for causing said computing device to perform the steps of the above method.

Further preferred features of the invention are defined in the dependent claims.

The method may further comprise receiving selection input in relation to the user profile application icon and launching a user profile application in response to receipt of the selection input. The launched user profile application may display on the display a user profile window having multiple selectable user profile options. The method may further comprise enabling receipt of further selection input in relation to a selected one of the user profile options and modifying or maintaining a current user profile option in response to receipt of the further selection input. The user profile options may comprise notification options for notifying the user of the occurrence of one or more predetermined events in relation to the handheld electronic device. The one or more predetermined events may be selected from the group consisting of: an alarm; receipt of a short message; receipt of an electronic mail message; a reminder; and receipt of an incoming call.

The method may further comprise, if further navigation input is received that comprises navigating along the second navigation axis while an icon in the subsidiary icon list is emphasized on the home screen, accessing the stored reference and shifting emphasis to the first main application icon. The main application icon list and the subsidiary icon list may be disposed on opposite portions of the home screen. The subsidiary icon list may be disposed adjacent a banner area of the home screen. The navigation component may comprise a two-dimensional navigation or scrolling component, such as a track-ball, a directional pad or a joystick.

### DESCRIPTION OF PREFERRED EMBODIMENTS

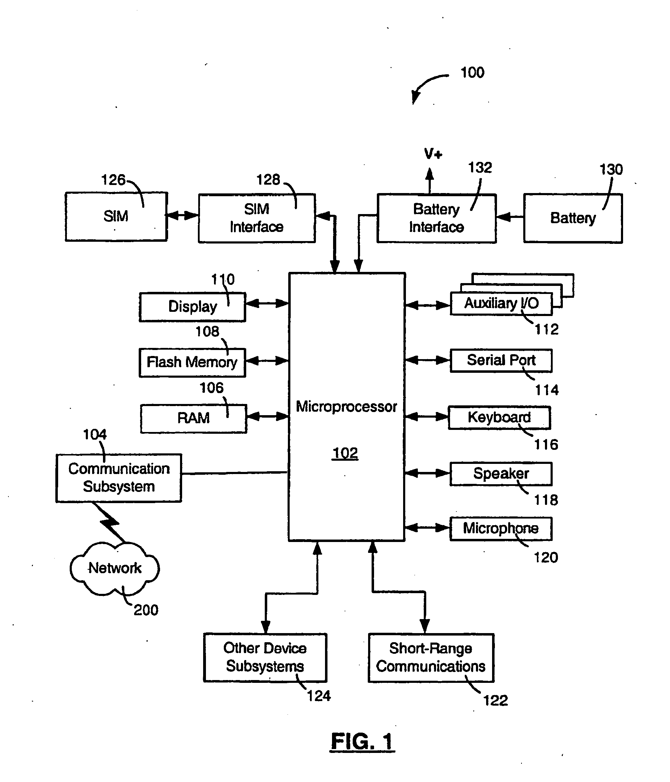

The handheld electronic device may be a mobile device that communicates with other devices. To aid the reader in understanding the structure of the mobile device and how it communicates with other devices, reference is made to FIGS. 1 through 3.

Referring first to FIG. 1, a block diagram of a mobile device in one example implementation is shown generally as 100. Mobile device 100 comprises a number of components, the controlling component being microprocessor 102. Microprocessor 102 controls the overall operation of mobile device 100. In some embodiments, certain communication functions, including data and voice communications, are performed through communication subsystem 104. Communication subsystem 104 receives messages from and sends messages to a wireless network 200.

In this example implementation of mobile device 100, communication subsystem 104 is configured for cellular communication in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS).

New standards are still being defined, but it is believed that they will have similarities to the network behavior described herein, and it will also be understood by persons skilled in the art that the described embodiments are intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and third-generation (3G) networks like EDGE and UMTS. Some older examples of data-centric networks include the Mobitex^{™} Radio Network and the DataTAC^{™} Radio Network. Examples of older voice-centric data networks include Personal Communication Systems (PCS) networks like GSM and Time Division Multiple Access (TDMA) systems.

Microprocessor 102 also interacts with additional subsystems such as a Random Access Memory (RAM) 106, flash memory 108, display 110, auxiliary input/output (I/O) subsystem 112, serial port 114, keyboard 116, speaker 118, microphone 120, short-range communications 122 and other devices 124.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator, media player or task list. Operating system software used by microprocessor 102 is typically stored in a persistent store such as flash memory 108, which may alternatively be a read-only memory (ROM) or similar storage element (not shown). Those skilled in the art will appreciate that the operating system, specific device applications, or parts thereof, may be temporarily loaded into a volatile store such as RAM 106.

In some embodiments, mobile device 100 may send and receive communication signals over network 200 after required network registration or activation procedures have been completed. Network access is associated with a subscriber or user of a mobile device 100. To identify a subscriber, mobile device 100 requires a Subscriber Identity Module or "SIM" card 126 to be inserted in a SIM interface 128 in order to communicate with a network. SIM 126 is one type of a conventional "smart card" used to identify a subscriber of mobile device 100 and to personalize the mobile device 100, among other things. Without SIM 126, mobile device 100 is not fully operational for communication with network 200.

By inserting SIM 126 into SIM interface 128, a subscriber can access all subscribed services. Services could include: web browsing media transfers, such as music and/or image downloading or streaming, and messaging, such as e-mail, voice mail, Short Message Service (SMS), and Multimedia Messaging Services (MMS). More advanced services may include: point of sale, field service and sales force automation. SIM 126 includes a processor and memory for storing information. Once SIM 126 is inserted in SIM interface 128, it is coupled to microprocessor 102. In order to identify the subscriber, SIM 126 contains some user parameters such as an International Mobile Subscriber Identity (IMSI). An advantage of using SIM 126 is that a subscriber is not necessarily bound by any single physical mobile device. SIM 126 may store additional subscriber information for a mobile device as well, including datebook (or calendar) information and recent call information. In certain embodiments, SIM 126 may comprise a different type of user identifer and may be integral to mobile device 100 or not present at all.

Mobile device 100 is a battery-powered device and includes a battery interface 132 for receiving one or more rechargeable batteries 130. Battery interface 132 is coupled to a regulator (not shown), which assists battery 130 in providing power V+ to mobile device 100. Although current technology makes use of a battery, future technologies such as micro fuel cells may provide the power to mobile device 100.

Microprocessor 102, in addition to its operating system functions, enables execution of software applications on mobile device 100. A set of applications that control basic device operations, including data and voice communication applications, will normally be installed on mobile device 100 during its manufacture.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 provides for communication between mobile device 100 and different systems or devices, without the use of network 200. For example, subsystem 122 may include an infrared device and associated circuits and components for short-range communication. Examples of short range communication would include standards developed by the Infrared Data Association (IrDA), Bluetooth, and the 802.11 family of standards developed by IEEE.

In use, a received signal such as a text message, an e-mail message, or web page download is processed by communication subsystem 104 and input to microprocessor 102. Microprocessor 102 then processes the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112.

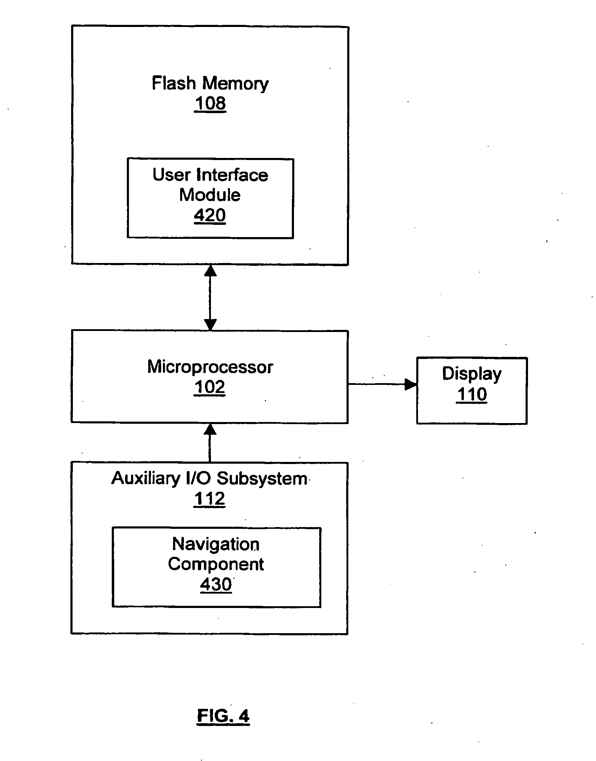

Auxiliary I/O subsystem 112 may include one or more devices such as: a touch screen; mouse; infrared fingerprint detector; and a navigation component with dynamic button-pressing capability comprising a roller wheel, track ball, joystick or directional pad. Keyboard 116 comprises an alphanumeric keyboard and/or telephone-type keypad. A composed item may be transmitted over network 200 through communication subsystem 104. User input components comprised in auxiliary I/O subsystem 112 may be used by the user to navigate and interact with a user interface of mobile device 100, examples of which are described below in relation to FIGS. 4 to 8.

For voice communications, the overall operation of mobile device 100 is substantially similar, except that the received signals are output to speaker 118, and signals for transmission are generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

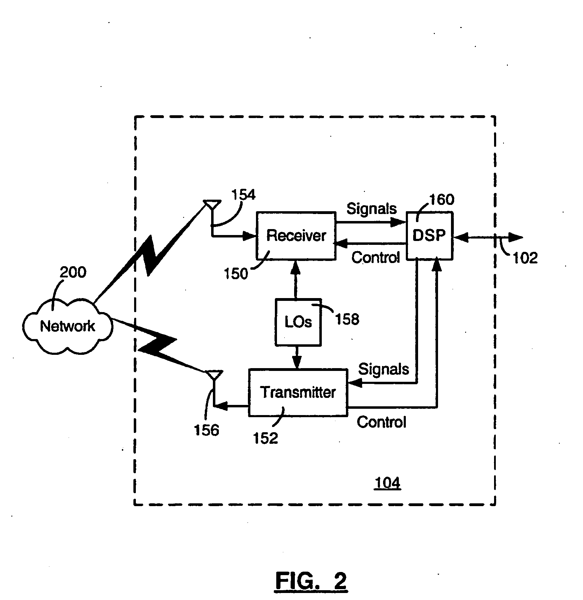

Referring now to FIG. 2, a block diagram of the communication subsystem component 104 of FIG. 1 is shown. Communication subsystem 104 comprises a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 is dependent upon the network 200 in which mobile device 100 is intended to operate, thus it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is a limited resource that must be conserved, typically due to limits in overall bandwidth and limited battery power of mobile device 100.

When mobile device 100 is fully operational, transmitter 152 is typically keyed or turned on only when it is sending to network 200 and is otherwise turned off to conserve resources. Similarly, receiver 150 is periodically turned off to conserve power until it is needed to receive signals or information (if at all) during designated time periods.

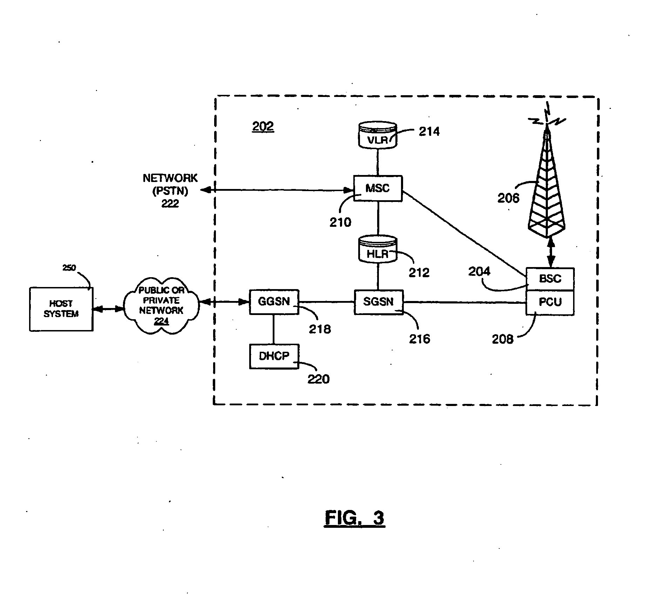

Referring now to FIG. 3, a block diagram of a node of a wireless network is shown as 202. In practice, network 200 comprises one or more nodes 202. Mobile device 100 communicates with a node 202 within wireless network 200. In the example implementation of FIG. 3, node 202 is configured in accordance with General Packet Radio Service (GPRS) and Global Systems for Mobile (GSM) technologies. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) server 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled by MSC 210.

Station 206 is a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 212. HLR 212 also contains location information for each registered mobile device and can be queried to determine the current location of a mobile device. MSC 210 is responsible for a group of location areas and stores the data of the mobile devices currently in its area of responsibility in VLR 214. Further VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support; namely packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218.

There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile device 100 is not using its PDP Context, the PDP Context can be deallocated and the IP address returned to the IP address pool managed by DHCP server 220.

Embodiments of mobile device 100 may be equipped and configured for communication over a cellular connection via communication subsystem 104 and with a wireless local area network (WLAN) using a communication form commonly termed "Wi-Fi". Such Wi-Fi connections may employ a suitable WLAN-compatible communication technology, of which unlicensed mobile access (UMA) technology is one example. UMA technology provides access to GSM and GPRS mobile services over unlicensed spectrum technologies, including Bluetooth^{™} and 802.11 wireless connections. UMA enables cellular network subscribers to roam and hand over between cellular networks and public and private wireless networks using dual-mode mobile handsets. Mobile device 100 may also be configured for communication with local wireless devices, such as Bluetooth^{™} enabled devices and may be configured for communication in a global positioning system (GPS) context.

Use of a handheld electronic device, such as mobile device 100, in the context of accessing a subsidiary icon list (that may include a user profile application icon) is described in further detail in relation to FIGS. 4 to 8. The embodiments described in relation to FIGS. 4 to 8 are primarily concerned with enabling quick and efficient access to the subsidiary list of icons from a main list of application icons. In this context, the subsidiary list of icons may contain one or more application icons for applications that may be infrequently used, but that are nonetheless important to be able to access quickly. In contrast, the application icons in the main application icon list may be for applications that are more commonly and/or frequently used by a user.

In one example, the main application icon list may include application icons for electronic mail, calendar, telephone, address book and task manager applications. The subsidiary application icon list may contain only an application icon for the user profile application (as a single item list) or may contain further application icons. Icons other than a user profile application icon may be accessed through the subsidiary icon list. However, for simplicity of illustration, embodiments are described primarily with reference to a subsidiary icon list that contains a user profile application icon.

Referring now to FIG. 4, user interface components of mobile device 100 are shown and described in further detail with reference to microprocessor 102 and display 110. These user interface components comprise a user interface module 420 stored as computer program instructions within flash memory 108 and a navigation component 430, such as a two-dimensional scrolling component, within auxiliary I/O subsystem 112. Navigation component 430 need not necessarily scroll as such, but must enable user navigation of displays provided on display 110. Flash memory 108 comprises various other program code, such as operating system software and other software applications, although these are not specifically shown for purposes of simplicity of illustration.

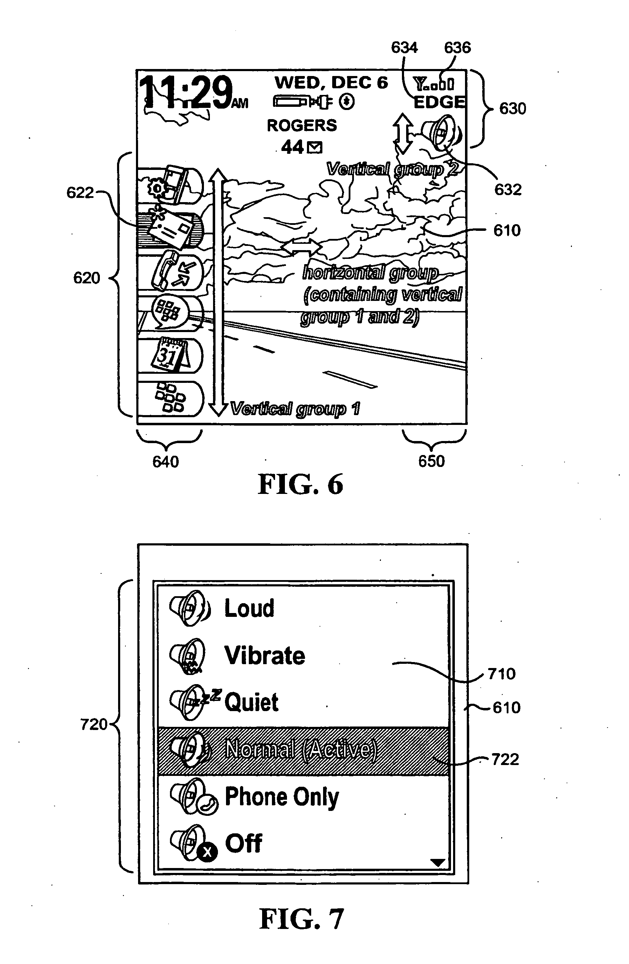

User interface module 420 communicates with microprocessor 102 to facilitate user interaction with mobile device 100. Display 110 and auxiliary I/O subsystem 112 may also be used to facilitate such user interaction and microprocessor 102 executes the program code of user interface module 420 in interacting with display 110 and auxiliary I/O subsystem 112, including navigation component 430. For example, selection of an icon, such as an application icon displayed on a home screen 610 (FIG. 6), may be performed by user manipulation of navigation component 430 to selectively move a cursor or shift emphasis from one icon to another and then "clicking" on the selected icon. Depending on the nature of the navigation component 430, "clicking" on an icon on home screen 610 may be done by depressing or otherwise actuating the navigation component 430 or depressing or otherwise actuating another scrolling component or button-type mechanism.

Navigation component 430 may comprise a track-ball, for example, that comprises a small sphere rotatable in directions in an X-Y plane (i.e. two-dimensional). The track-ball may be depressed in the Z direction (i.e. in a direction into mobile device 100), perpendicular to the X-Y plane. Alternatively, instead of a track-ball, a two-dimensional navigation pad, sometimes called a directional pad, may be used as the navigation component 430. The navigation pad is actuable in one of four, or possibly more, directions, depending on which part of the navigation pad is pressed by the user. A further alternative navigation component 430 comprises a movable lever, in the form of a small joystick, that can be pressed or tilted in directions in an X-Y plane and optionally depressed in the Z direction, perpendicular to the X-Y plane. The described examples of navigation component 430 may each allow depression in the Z direction, independently of two-dimensional movement in the X-Y plane, to effect selection of an item on display 110, equivalent to "clicking" on the item.

Microprocessor 102 may receive movement signals from navigation component 430 resulting from movement of the navigation component 430 by the user. Microprocessor 102 decodes the received movement signals and, based on specifications provided by user interface module 420, generates appropriate output to display 110 corresponding to the movement indicated by the movement signals received from navigation component 430. In this way, the user is enabled to shift focus from one area of a screen displayed on display 110 to another area on the screen.

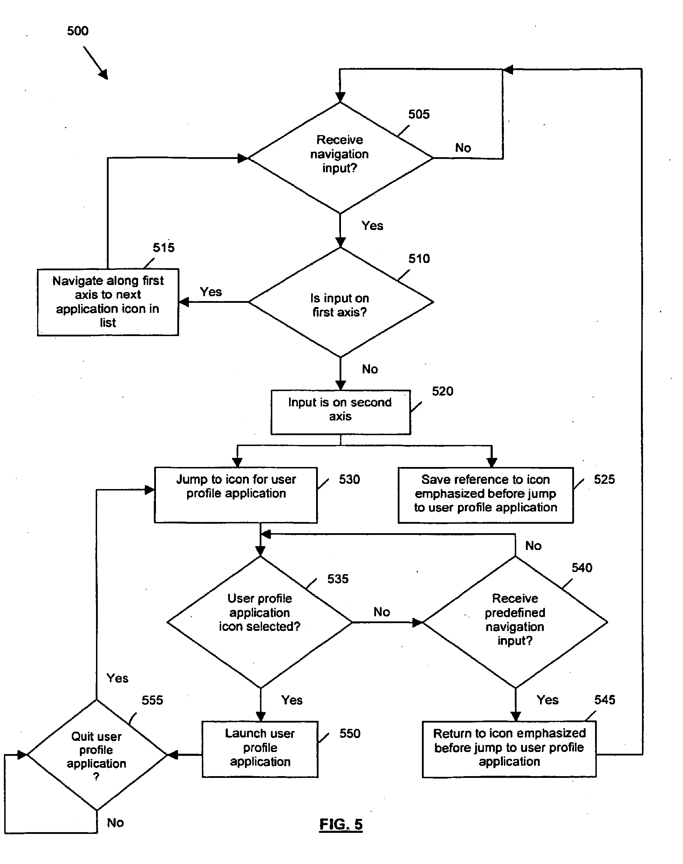

Referring now to FIG. 5, there is shown a method 500 of accessing a user profile application of mobile device 100. As described in relation to method 500, the user profile application is one example of an application that can be accessed within a subsidiary list of application icons. The subsidiary list can be accessed by scrolling in a perpendicular direction to the normal scrolling direction of a main list of application icons on home screen 610. Applications other than the user profiles application may be accessed in the subsidiary list in the same manner as is described in relation to method 500 for the user profiles application. The description of method 500 is made with reference to FIG. 6, which illustrates an example screen shot of home screen 610, provided on display 110 of mobile device 100. Method 500 assumes that the user is initially viewing home screen 610 and that an icon in the main application icon list is emphasized.

Method 500 begins at step 505, at which user interface module 420 (executed by microprocessor 102) monitors whether navigation input from the user is received via navigation component 430. Once navigation input is received (in the form of movement signals), then user interface module 420 checks at step 510 whether the navigation input indicates desired movement in a direction along a first axis which is the direction along which the main application icon list 620 is oriented, shown in the example of FIG. 6 as being oriented vertically. If user interface module 420 determines that the navigation input is along the first axis, or at least predominantly along the first axis (where the navigation component 430 can be manipulated to move in directions that are a combination of the standard up, down, left and right directions), then at step 515, user interface module 420 shifts emphasis among icons along the first axis to a next or further application icon in main list 620, assuming further application icons are contained in main list 620 in the direction indicated by the user input. If the navigation input is ambiguous as to its direction, one or neither of the first and second axes may be selected as the default. Following step 515, step 505 is repeated.

If, at step 510, the user input is determined to not be on the first axis, then at step 520, user interface module 420 determines that the user input is along the second axis, as the second axis is the only other axis available for navigation input. In the described embodiments, the first and second navigation axes are generally perpendicular to each other. However, alternative embodiments may employ relative orientations of the axes that are not perpendicular.

Once user interface module 420 determines that the navigation input is along the second axis, then, at step 525, user interface module 420 stores a link or reference to the icon that was emphasized within the main icon list 620 immediately prior to receipt of the navigation input along the second axis. The reference or link to the icon in main application icon list 620 that is stored at step 525 may be a numerical pointer or other identifier, such as an icon name or label. The reference is stored in a memory of mobile device 100, such as in RAM 106, for example.

Simultaneously with step 525, at step 530, user interface module 420 causes emphasis to jump from an icon in the main icon list 620 to an icon in a subsidiary icon list 630 that includes a user profile application icon 632. Subsidiary icon list 630 may include further or alternative application icons, such as icons in the banner area relating to network technology or signal strength, for example. Such icons may provide a display function that is independent of the application to which they relate and therefore may be graphically different from the application icon for that application. In the example screen shot shown in FIG. 6, subsidiary icon list 630 comprises a network technology icon 634 (shown as "EDGE") and a signal strength icon 636. Either or both of the network technology and signal strength icons 634, 636 may be associated with a separate application (such as a manage connections application), for allowing the user to view and control wireless connections supported by mobile device 100. As part of step 530, the user profile application icon 632 is caused by user interface module 420 to be emphasized on home screen 610.

Emphasis of an icon on home screen 610 may be performed by contrasting the icon in relation to graphical elements adjacent to or surrounding the icon. For example, emphasis may include changing a color of the icon, changing a color of an area around the icon, causing the icon or its surrounding area to repeatedly change color in a blinking fashion, causing a box or other shape to appear around the icon, changing the visual appearance of one or more graphical components of the icon or otherwise causing the icon to visually stand out on home screen 610. In the example screen shot of home screen 610 shown in FIG. 6, an email application icon 622 in main application icon list 620 is shown to be emphasized as the field behind email application icon 622 is of a visually discernable different shade (or color) to fields behind other icons in main application icon list 620. Thus, email application icon 622 visually stands out to a user viewing home screen 610 as being emphasized relative to other icons in the list.

In further embodiments, step 520 may comprise determining which direction along the second axis is indicated by the movement signals generated by the navigation input. For example, if the second axis is a horizontal axis, the navigation input may indicate movement in a left horizontal direction or in a right horizontal direction. In certain embodiments, steps 525 and 530 may only be performed if a predetermined one of the two possible directions along the second axis is indicated by the movement signals generated from the navigation input. For example, where the main application icon list 620 is positioned along a left side of home screen 610, steps 525 and 530 may only be performed when the navigation input is in a right horizontal direction.

Following step 530, user interface module 420 monitors whether the user actually selects the user profile application icon 632, at step 535, for example by clicking when it is emphasized, using navigation component 430. While user profile application icon 632 is emphasized but not selected, user profile module 420 also monitors at step 540 whether navigation input of a predefined nature is received from the user. Such predefined navigation input may comprise navigation in one or more directions. For example, for the layout of home screen 610 shown in FIG. 6, the predefined navigation input may comprise navigation down or to the left from user profile application icon 632.

If subsidiary icon list 630 contains more than one application icon, for example in a vertically oriented grouping as shown in FIG. 6, then user interface module 420 interprets navigation input from the user in a direction along the first axis (i.e. vertically upward, in this case) as requiring navigation among the application icons in the subsidiary icon list 630. In one embodiment, navigation vertically downward from user profile application icon 632 will result in returning emphasis to an icon in the main icon list (where there are no icons below icon 632 in the subsidiary icon list). However, if the navigation input received from the user is in a direction along the second axis (i.e. horizontally to the left, in the example shown in FIG. 6), when user profile application icon 632 is emphasized, then user interface module 420 interprets this input as requiring emphasis to shift to one of the application icons in the main application icon list 620 on the left side of home screen 610. In the example shown, navigation to the right may have no effect on shifting emphasis.

If at step 540 the predefined navigation input is received, then at step 545, user interface module 420 retrieves the stored reference memory 106 or 108 and shifts emphasis to the icon corresponding to the stored reference. Following step 545, method 500 returns to step 505.

Where there is more than one icon in subsidiary application icon list 630 and user input is received that requires a shift in emphasis back to the main application icon list 620, user interface module 420 may save a reference to the icon in subsidiary icon list 630 that is emphasized immediately prior to receiving the navigation input that requires the shift in emphasis. Accordingly, if subsequent navigation input requires a shift in emphasis back to the subsidiary icon list 630, user interface module 420 retrieves the restored icon reference that was stored when emphasis was last shifted away from the subsidiary icon list 630, and the icon corresponding to the retrieved icon reference is caused by user interface module 420 to be emphasized on home screen 610. The storing of an icon reference for an icon emphasized immediately prior to a shift in emphasis to another icon list or group may be performed regardless of the position, orientation or number of icon lists or groups displayed on home screen 610.

For embodiments where user profile application icon 632 is the only icon in the subsidiary icon list 630, particular embodiments may only shift emphasis from the main application icon list 620 to the subsidiary icon list 630 when the navigation input is horizontally to the right and emphasis will only shift back to the main application icon list 620 from the subsidiary icon list 630 when the navigation input is horizontally to the left or vertically downward. For such particular embodiments, navigation input in other directions will not result in a shift in emphasis from one application icon list to another.

In further embodiments, the relative location of the subsidiary icon list 630 relative to the main application icon list 620 may dictate the directions for which navigation input will result in a shift in emphasis. For example, if user profile application 632 (being the only icon in subsidiary icon list 630) is located in the bottom right-hand corner of home screen 610, then navigation vertically upward or horizontally left will result in shifting emphasis back to main application icon list 620 (when user profile application 632 is emphasized).

In one embodiment, subsidiary application icon list 630 may have multiple application icons oriented in a horizontal list that is navigable by navigation along the second (horizontal) axis. For such an embodiment, step 540 may only proceed to return to the main application icon list 620 at step 545 if the navigation input received at step 540 is along the first (vertical) axis.

If, at step 535, the user profile application icon 632 is selected, then at step 550, a user profile application is launched and a user profile application window 710 (FIG. 7) is displayed over home screen 610. Once the user profile application has been launched at step 550, then at step 555, user interface module 420 monitors whether the user has quit the user profile application. The user profile application may be quit by the user by, for example, pressing an escape or "back" key or by selecting one of the user profile options displayed on user profile application window 710. Once user interface module 420 determines that the user wishes to quit the user profile application at step 555, user interface module 420 closes user profile application window 710 and returns to home screen 610 with user profile application icon 632 being emphasized, at step 530.

Referring in particular to FIG. 6, there is shown an example screen shot of a home screen 610 displayed on display 110 of mobile device 100. In the example shown, home screen 610 comprises spaced groups of icons on opposite sides of home screen 610. On a left side of home screen 610 is a first vertically oriented group of icons 640, while on a right side of home screen 610 is a second vertically oriented group of icons 650. Thus, first and second vertical icon groups 640 and 650 are horizontally spaced from each other. First and second vertical icon groups 640 and 650 may also be considered to comprise a horizontal group of icon groups.

In the example home screen 610 shown in FIG. 6, main application icon list 620 is comprised in the first vertical icon group 640 and the subsidiary icon list 630 is comprised in the second vertical icon group 650. In alternative embodiments, user interface module 420 may configure the icons differently. For example, instead of first and second vertical groups 640 and 650 being positioned on the left and right sides of home screen 610, they may be disposed on the right and left sides, respectively, of home screen 610. Further, instead of being disposed vertically, icon groups 640 and 650 may be disposed horizontally along respective top and bottom (or bottom and top) portions of home screen 610.

In further alternative embodiments, one of the icon groups 640 and 650 may be disposed vertically, while the other group is disposed horizontally. Further, in alternative embodiments, icon groups 640 and 650, whether vertical or horizontal, are not disposed at opposite edges of home screen 610, but are nonetheless positioned relative to each other so that navigation along a first (vertical or horizontal) axis results in scrolling along either the main application icon list 620 or the subsidiary icon list 630, while navigation along the second (horizontal or vertical) axis results in shifting emphasis between an icon in one of the main and subsidiary icon lists to an icon in the other icon list. However, where the subsidiary icon list 630 consists only of a single application icon, such as user profile application icon 632, user interface module 420 may interpret any navigation input received from the user as requiring a shift in emphasis back to the main application icon list 620.

In further alternative embodiments, more than two groups of icons may be displayed on home screen 610. For example, three vertically oriented (and horizontally separated) icon groups may be shown on home screen 610. Alternatively, three horizontally oriented (and vertically separated) icon groups may be shown on home screen 610. Alternatively, two of the icon groups may be oriented in one (horizontal or vertical) direction, while one or more other icon groups may be oriented in another (vertical or horizontal) direction. In these embodiments, the icon groups are sufficiently spaced from each other so as to be visually distinct from one another. In these embodiments, each group may contain icons that are grouped based on certain characteristics, such as frequency of use, type of function or other characteristics.

Further, where the main application icon list 620 and subsidiary icon list 630 are oriented differently (i.e. one vertical and the other horizontal), navigation input received from the user along the axis in which the icon list is oriented will result in shifting emphasis along the icon list, while navigation input received in an axis that is perpendicular to the orientation of that icon list, or toward the other icon list, will result in shifting emphasis to an icon in the other icon list (assuming that subsidiary icon list 630 comprises more than one application icon). For example, if main application icon list 620 is oriented vertically and subsidiary icon list 630 is oriented horizontally, then horizontal navigation input received from the user while an icon in main application icon list 620 is emphasized will result in shifting emphasis to an icon in subsidiary application icon list 630. Similarly, because subsidiary icon list 630 is oriented horizontally, vertical navigation input received from the user (while an icon in subsidiary icon list 630 is emphasized) will result in shifting emphasis to an icon in the main application icon list 620.

Where emphasis is shifted from an icon in one icon group to another icon group, microprocessor stores a reference to the icon from which emphasis was shifted, and this reference is used to return emphasis to that icon when emphasis is shifted back to the one icon group.

In further embodiments, icons in home screen 610 may not necessarily be oriented along horizontal or vertical lines. Instead, the first and second icon groups or lists may be diagonally linear. In still further embodiments, the icon groups or lists may follow a curved or circular path.

Referring now to FIG. 7 in particular, there is shown an example screen shot of a home screen 610 with a user profile application window 710 open on top of home screen 610. User profile application window 710 consists primarily of a plurality of selectable profile options relating to event notification settings of mobile device 100. These profile options may include, for example, settings such as: a loud volume setting, a vibration only setting, a quiet setting, a normal (active) setting, a telephone only setting and an off setting.

As shown in FIG. 7, the profile options 720 displayed in user profile application window 710 may comprise an icon representative of the selected profile option (notification setting), together with a written description of the profile option. When opened, the user profile application displays the current user profile setting for the mobile device 100 in an emphasized manner, as indicated by reference numeral 722 in FIG. 7 in relation to the normal (active) setting.

The user can navigate the user profile application window 710 by use of the navigation component 430. In the example shown in FIG. 7, vertical navigation will result in shifting emphasis from one user profile setting to another user profile setting displayed in a list of such settings in user profile application window 710.

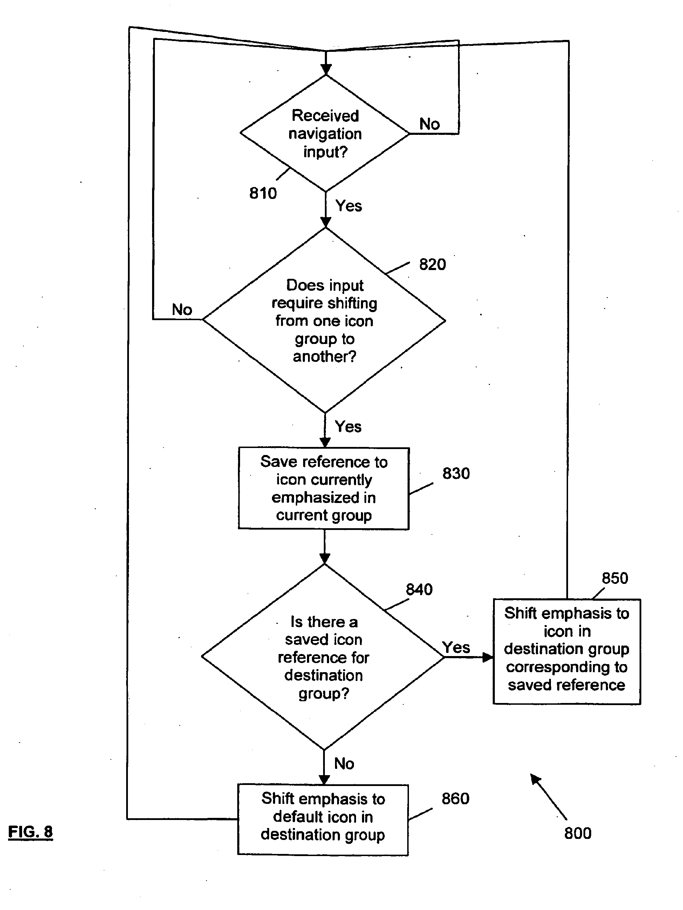

Referring now to FIG. 8, there is shown a generalized method 800 of shifting emphasis from one icon list or group to another. Method 800 begins at step 810, at which user interface module 420 awaits receipt of navigation input. Once navigation input is received, user interface module 420 then determines at step 820 whether the navigation input requires shifting emphasis from one icon group to another. Examples of when the navigation input may require shifting emphasis from an icon in one group or list to an icon in another group or list are described above in relation to FIGS. 5 and 6. Whether particular navigation input requires shifting of emphasis from one icon group or list to another depends on the particular user interface characteristics and parameters established for user interface module 420, for example according to different themes. If the user input is determined by user interface module 420 at step 820 to not require shifting emphasis from one icon group to another, then method 800 returns to step 810.

Where a shift in emphasis is determined to be required at step 820, user interface module 420 stores in RAM 106 or Flash memory 108 a reference to the icon in the current icon list or group that is currently emphasized, at step 830. User interface module 420 then checks, at step 840, whether there is a saved icon reference for the group or list to which emphasis is to be shifted (i.e. the destination group). If, at step 840, user interface module 420 determines that there is such an icon reference stored for the destination group, then at step 850, emphasis is shifted to the icon in the destination group corresponding to the saved icon reference.

If there is no icon reference saved for the destination group, then user interface module 420 will determine a default icon in the destination group and emphasis will be shifted to that icon at step 860. The icon designated as the default icon is configurable and may be preconfigured to be a specific icon in the group, such as the top, bottom, left-most, right-most or middle icon in the list, for example. Alternatively, the default icon may be the icon that the user interface module 420 determines to be the most frequently selected application icon in the icon group.

Following steps 850 and 860, method 800 returns to step 810.

While the above description provides examples of the embodiments, it will be appreciated that some features and/or functions of the described embodiments are susceptible to modification without departing from the scope of the invention. Accordingly, the above description of the preferred embodiments is intended to be illustrative of the invention and non-limiting.

## Claims

1. A method (500, 800) for accessing an icon of a handheld electronic device (100), comprising:
providing on a home screen (610) of a display (110) of the handheld electronic device (100) a main application icon list (620) of main application icons oriented with respect to a first navigation axis and a subsidiary icon list (630) comprising a plurality of icons (632, 634, 636) and being spaced from the main application icon list (620);
receiving (505, 810) first navigation input via a navigation component (430) of the handheld electronic device (100), the navigation component (430) enabling navigation in the display (110) along the first navigation axis and along a second navigation axis;
determining (520, 820) that the first navigation input comprises navigating along the second navigation axis; and
**characterized in that** if a first main application icon in the main application icon list (620) is emphasized prior to receiving the first navigation input, shifting emphasis (530, 850, 860) to a default icon in the subsidiary icon list (630) based on the determining (520, 820), and storing a reference to the first main application icon to be used to return emphasis to the first main application icon when reverting to the main application icon list.

2. The method of claim 1, wherein the subsidiary icon list (630) comprises a user profile application icon (632).

3. The method of claim 1 or claim 2, wherein the default icon is the user profile application icon (632).

4. The method of claim 2, further comprising receiving (535) selection input in relation to the user profile application icon (632) and launching (550) a user profile application in response to receipt of the selection input.

5. The method of any one of claims 1 to 4, further comprising, if further navigation input is received that comprises navigating along the second navigation axis while an icon in the subsidiary icon list (630) is emphasized on the home screen (610), accessing the stored reference and shifting emphasis (850) to the first main application icon.

6. The method of any one of claims 1 to 5, wherein the main application icon list (620) and the subsidiary icon list (630) are disposed on opposite portions of the home screen (610).

7. The method of any one of claims 1 to 6, wherein the subsidiary icon list (630) is disposed adjacent a banner area of the home screen (610).

8. The method of any one of claims 1 to 7, wherein the method further comprises using a navigation component (430) comprising: a track-ball, a directional pad or a joystick.

9. The method of any one of claims 1 to 8, wherein the subsidiary icon list (630) comprises an icon (634, 636) associated with a wireless connection manager application.

10. A method according to any preceding claim wherein the second navigation axis is perpendicular to the first navigation axis.

11. A handheld electronic device (100), comprising:
a processor (102);
a display (110) responsive to the processor (102);
a navigation component (430) having a first navigation axis and a second navigation axis, the navigation component (430) being coupled to the processor (102) for providing navigation input to the processor (102);
a memory (108) accessible to the processor and storing program code (420) executable by the processor (102) for executing a user interface application,
wherein the user interface application is configured to cause the handheld electronic device (100) to perform the steps of the method of any one of claims 1 to 10.

12. A computer readable medium storing computer readable instructions (420) executable by a processor (102) of a computing device (100) for causing said computing device (100) to perform the steps of the method of any one of claims 1 to 10.

## Patentansprüche

1. Verfahren (500, 800) zum Zugriff auf ein Symbol einer tragbaren elektronischen Vorrichtung (100), das umfasst:
Bereitstellen einer Hauptanwendungssymbolliste (620) mit Hauptanwendungssymbolen, die mit Bezug auf eine erste Navigationsachse ausgerichtet sind, und einer untergeordneten Symbolliste (630), die eine Vielzahl von Symbolen (632, 634, 636) umfasst und von der Hauptanwendungssymbolliste (620) beabstandet ist, auf einem Home-Bildschirm (610) einer Anzeige (110) der tragbaren elektronischen Vorrichtung (100);
Empfangen (505, 810) einer ersten Navigationseingabe über eine Navigationskomponente (430) der tragbaren elektronischen Vorrichtung (100), wobei die Navigationskomponente (430) die Navigation auf der Anzeige (110) entlang der ersten Navigationsachse und entlang einer zweiten Navigationsachse ermöglicht;
Ermitteln (520, 820), dass die erste Navigationseingabe das Navigieren entlang der zweiten Navigationsachse umfasst; und
**dadurch gekennzeichnet, dass,** falls ein erstes Hauptanwendungssymbol in der Hauptanwendungssymbolliste (620) vor dem Empfangen der ersten Navigationseingabe hervorgehoben wird, Verlagern der Hervorhebung (530, 850, 860) auf ein Standardsymbol in der untergeordneten Symbolliste (630) basierend auf der Ermittlung (520, 820), wobei das Speichern eines Verweises auf das erste Hauptanwendungssymbol, das zum Zurückgeben der Hervorhebung an das erste Hauptanwendungssymbol beim Zurückkehren zu der Hauptanwendungssymbolliste zu verwenden ist.

2. Verfahren nach Anspruch 1, wobei die untergeordnete Symbolliste (630) ein Benutzerprofilanwendungssymbol (632) umfasst.

3. Verfahren nach Anspruch 1 oder Anspruch 2, wobei das Standardsymbol das Benutzerprofilanwendungssymbol (632) ist.

4. Verfahren nach Anspruch 2, das ferner das Empfangen (535) einer Auswahleingabe in Beziehung zu dem Benutzerprofilanwendungssymbol (632) und das Starten (550) einer Benutzerprofilanwendung als Reaktion auf den Empfang der Auswahleingabe umfasst.

5. Verfahren nach einem der Ansprüche 1 bis 4, das ferner, falls eine weitere Navigationseingabe empfangen wird, die das Navigieren entlang der zweiten Navigationsachse umfasst, während ein Symbol in der untergeordneten Symbolliste (630) auf dem Home-Bildschirm (610) hervorgehoben wird, den Zugriff auf den gespeicherten Verweis und das Verlagern der Hervorhebung (850) auf das erste Hauptanwendungssymbol umfasst.

6. Verfahren nach einem der Ansprüche 1 bis 5, wobei die Hauptanwendungssymbolliste (620) und die untergeordnete Symbolliste (630) in gegenüberliegenden Teilbereichen des Home-Bildschirms (610) angeordnet sind.

7. Verfahren nach einem der Ansprüche 1 bis 6, wobei die untergeordnete Symbolliste (630) neben einem Bannerbereich des Home-Bildschirms (610) angeordnet ist.

8. Verfahren nach einem der Ansprüche 1 bis 7, wobei das Verfahren ferner das Verwenden einer Navigationskomponente (430) umfasst, die umfasst: Einen Trackball, ein Steuerkreuz oder einen Joystick.

9. Verfahren nach einem der Ansprüche 1 bis 8, wobei die untergeordnete Symbolliste (630) ein mit einer Wireless-Connection-Manager-Anwendung verknüpftes Symbol (634, 636) umfasst.

10. Verfahren nach einem vorhergehenden Anspruch, wobei die zweite Navigationsachse senkrecht zur ersten Navigationsachse ist.

11. Tragbare elektronische Vorrichtung (100), die umfasst:
einen Prozessor (102);
eine auf den Prozessor (102) reagierende Anzeige (110);
eine Navigationskomponente (430) mit einer ersten Navigationsachse und einer zweiten Navigationsachse, wobei die Navigationskomponente (430) mit dem Prozessor (102) verbunden ist, um eine Navigationseingabe an den Prozessor (102) zu liefern;
einen Speicher (108), auf den der Prozessor zugreifen kann und der Programmcode (420) speichert, der von dem Prozessor zum Ausführen einer Benutzerschnittstellenanwendung ausführbar ist, wobei die Benutzerschnittstellenanwendung konfiguriert ist, um zu bewirken, dass die tragbare elektronische Vorrichtung (100) die Schritte des Verfahrens nach einem der Ansprüche 1 bis 10 durchführt.

12. Computerlesbares Medium, das computerlesbare Befehle (420) speichert, die von einem Prozessor (102) einer Computervorrichtung (100) ausführbar sind, um zu bewirken, dass die Computervorrichtung (100) die Schritte des Verfahrens nach einem der Ansprüche 1 bis 10 durchführt.

## Revendications

1. Un procédé (500, 800) pour accéder à une icône d'un dispositif électronique portatif (100), comportant les étapes suivantes :
fournir sur un écran d'accueil (610) d'un affichage (110) du dispositif électronique portatif (100) une liste d'icônes d'application principales (620) d'icônes d'application principales orientée par rapport à un premier axe de navigation et une liste d'icônes secondaires (630) comportant une pluralité d'icônes (632, 634, 636) et étant espacée de la liste d'icônes d'application principales (620) ;
recevoir (505, 810) une première entrée de navigation par l'intermédiaire d'un composant de navigation (430) du dispositif électronique portatif (100), le composant de navigation (430) permettant une navigation dans l'affichage (110) suivant le premier axe de navigation et suivant un deuxième axe de navigation ;
déterminer (520, 820) que la première entrée de navigation comporte une navigation suivant le deuxième axe de navigation ; et
**caractérisé en ce que** si une première icône d'application principale dans la liste d'icônes d'application principales (620) est mise en évidence avant de recevoir la première entrée de navigation, déplacer la mise en évidence (530, 850, 860) sur une icône par défaut dans la liste d'icônes secondaires (630) sur la base de la détermination (520, 820), dans laquelle le stockage d'une référence à la première icône d'application principale devant être utilisée pour faire revenir la mise en évidence sur la première icône d'application principale lors du retour à la liste d'icônes d'application principales.

2. Le procédé de la revendication 1, dans lequel la liste d'icônes secondaires (630) comporte une icône d'application de profil d'utilisateur (632).

3. Le procédé de la revendication 1 ou de la revendication 2, dans lequel l'icône par défaut est l'icône d'application de profil d'utilisateur (632).

4. Le procédé de la revendication 2, comportant de plus la réception (535) d'une entrée de sélection par rapport à l'icône d'application de profil d'utilisateur (632) et le lancement (550) d'une application de profil d'utilisateur en réponse à la réception de l'entrée de sélection.

5. Le procédé de n'importe laquelle des revendications 1 à 4, comportant de plus, si une entrée de navigation supplémentaire qui comporte une navigation suivant le deuxième axe de navigation tandis qu'une icône dans la liste d'icônes secondaires (630) est mise en évidence sur l'écran d'accueil (610) est reçue, l'accès à la référence stockée et le déplacement de la mise en évidence (850) sur la première icône d'application principale.

6. Le procédé de n'importe laquelle des revendications 1 à 5, dans lequel la liste d'icônes d'application principales (620) et la liste d'icônes secondaires (630) sont disposées sur des portions opposées de l'écran d'accueil (610).

7. Le procédé de n'importe laquelle des revendications 1 à 6, dans lequel la liste d'icônes secondaires (630) est disposée de façon adjacente à une zone bannière de l'écran d'accueil (610).

8. Le procédé de n'importe laquelle des revendications 1 à 7, dans lequel le procédé comporte de plus l'utilisation d'un composant de navigation (430) comportant : une boule de commande, un pavé directionnel ou une manette.

9. Le procédé de n'importe laquelle des revendications 1 à 8, dans lequel la liste d'icônes secondaires (630) comporte une icône (634, 636) associée à une application gestionnaire de connexion sans fil.

10. Un procédé selon n'importe quelle revendication précédente dans lequel le deuxième axe de navigation est perpendiculaire au premier axe de navigation.

11. Un dispositif électronique portatif (100), comportant :
un processeur (102) ;
un affichage (110) réactif au processeur (102) ;
un composant de navigation (430) ayant un premier axe de navigation et un deuxième axe de navigation, le composant de navigation (430) étant couplé au processeur (102) pour fournir une entrée de navigation au processeur (102) ;
une mémoire (108) accessible au processeur et stockant un code de programme (420) exécutable par le processeur pour exécuter une application d'interface utilisateur, où l'application d'interface utilisateur est configurée afin d'amener le dispositif électronique portatif (100) à réaliser les étapes du procédé de n'importe laquelle des revendications 1 à 10.

12. Un support lisible par ordinateur stockant des instructions lisibles par ordinateur (420) exécutables par un processeur (102) d'un dispositif informatique (100) pour amener ledit dispositif informatique (100) à réaliser les étapes du procédé de n'importe laquelle des revendications 1 à 10.
